# EUROPEAN PATENT SPECIFICATION

(11) **EP 4 310 975 B1**
(45) Date of publication and mention of the grant of the patent: **12.02.2025**
(21) Application number: 22887575.3
(22) Date of filing: 25.10.2022
(51) Int. Cl.: H01M 10/0567, H01M 10/052, H01M 10/0569, H01M 10/42

(54) **ADDITIVE FOR NON-AQUEOUS ELECTROLYTE, AND NON-AQUEOUS ELECTROLYTE AND LITHIUM SECONDARY BATTERY WHICH INCLUDE THE SAME**
ADDITIV FÜR WASSERFREIEN ELEKTROLYT, WASSERFREIER ELEKTROLYT DAMIT UND LITHIUMSEKUNDÄRBATTERIE DAMIT
ADDITIF POUR ÉLECTROLYTE NON AQUEUX, ÉLECTROLYTE NON AQUEUX LE COMPRENANT, ET BATTERIE SECONDAIRE AU LITHIUM LE COMPRENANT

(30) Priority: 26.10.2021 KR 20210143853
(43) Date of publication of application: 24.01.2024
(73) Proprietor: LG ENERGY SOLUTION, LTD., Seoul 07335 (KR)
(72) Inventor: SHIN, Won Kyung, Daejeon 34122 (KR); AHN, Kyoung Ho, Daejeon 34122 (KR); HAN, Jun Hyeok, Daejeon 34122 (KR); OH, Young Ho, Daejeon 34122 (KR); LEE, Chul Haeng, Daejeon 34122 (KR); LEE, Won Tae, Daejeon 34122 (KR); JI, Su Hyeon, Daejeon 34122 (KR); JEONG, You Kyeong, Daejeon 34122 (KR)
(74) Representative: Hoffmann Eitle
(86) International application number: PCT/KR2022/016384
(87) International publication number: WO 2023/075379

(56) References cited:
- EP-A1- 4 007 012
- WO-A1-2009/055628
- WO-A1-2021/020005
- WO-A1-2021/020005
- JP-A- 2012 119 091
- JP-A- 2012 119 091
- JP-B2- 6 225 903
- KR-A- 20100 094 475
- KIM HYUNJIN, KIM YOUN SANG, YOO JEEYOUNG: "An in situ formed LiF protective layer on a Li metal anode with solvent-less cross-linking", SUSTAINABLE ENERGY & FUELS, vol. 4, no. 7, 30 June 2020 (2020-06-30), pages 3282 - 3287, XP093061499, DOI: 10.1039/D0SE00357C

## Description

### TECHNICAL FIELD

### Cross-reference to Related Applications

This application claims priority from Korean Patent Application Nos. 10-2021-0143853, filed on October 26, 2021, and 10-2022-0138354, filed on October 25, 2022.

### Technical Field

The present disclosure relates to an additive for a non-aqueous electrolyte, and a non-aqueous electrolyte and a lithium secondary battery which include the same.

### BACKGROUND ART

There is a need to develop technology for efficiently storing and utilizing electrical energy as personal IT devices and computer networks are developed with the recent development of information society and the accompanying dependency of society as a whole on the electrical energy is increased.

Particularly, studies of lithium ion batteries, which are in the spotlight as clean energy with low carbon dioxide emissions, have been extensively conducted as an interest in solving environmental problems and realizing a sustainable circular society emerges.

Since the lithium ion batteries not only have the highest theoretical energy density among electricity storage devices, but also may be miniaturized to be applicable to a personal IT device and have a high operating voltage, the lithium ion batteries are also in the spotlight as power sources for power storage and power sources for electric vehicles as well as power sources of notebook computers and mobile phones.

The lithium ion battery is largely composed of a positive electrode formed of a transition metal oxide containing lithium, a negative electrode capable of storing lithium, an electrolyte that becomes a medium for transferring lithium ions, and a separator, and, among them, a significant amount of research on the electrolyte has been conducted while the electrolyte is known as a component that greatly affects stability or safety of the battery. WO 2021/020005 A1 discloses additives for lithium batteries.

As charge and discharge of the lithium secondary battery proceed, performance of the positive electrode may be degraded while a positive electrode active material is structurally collapsed due to a decomposition product of a lithium salt included in the electrolyte, and, also, transition metal ions may be dissolved from a surface of the positive electrode during the structural collapse of the positive electrode. Since the transition metal ions thus dissolved are electro-deposited on the positive electrode or negative electrode to increase resistance of the positive electrode, degrade the negative electrode, or destruct a solid electrolyte interphase (SEI), additional electrolyte decomposition and the resulting lifetime degradation and increase in resistance of the battery occur.

Such a battery performance degradation phenomenon tends to be further accelerated when a potential of the positive electrode is increased or when the battery is exposed to a high temperature.

Thus, in order to suppress the dissolution of the transition metal ions from the positive electrode or prevent the degradation of the negative electrode, research on an electrolyte composition capable of forming a stable SEI film on a surface of the electrode is urgently needed.

### DISCLOSURE OF THE INVENTION

### TECHNICAL PROBLEM

An aspect of the present disclosure provides an additive for a non-aqueous electrolyte which may form a stable and low-resistance film on a surface of an electrode even at a high temperature.

Another aspect of the present disclosure provides a non-aqueous electrolyte for a lithium secondary battery, which may improve low-temperature capacity characteristics and high-temperature durability by forming a robust film on the surface of the electrode by including the additive for a non-aqueous electrolyte, and a lithium secondary battery including the same.

### TECHNICAL SOLUTION

According to an aspect of the present disclosure, there is provided
an additive for a non-aqueous electrolyte which includes a compound represented by Formula 1: 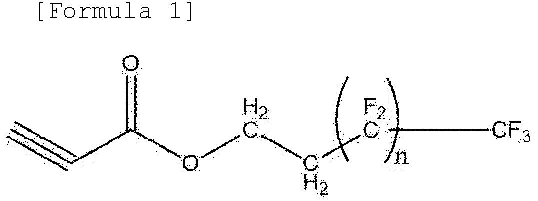
wherein, in Formula 1,
n is an integer of 2 to 20.

According to another aspect of the present disclosure, there is provided a non-aqueous electrolyte for a lithium secondary battery which includes a lithium salt, a non-aqueous organic solvent, and the additive for a non-aqueous electrolyte,
wherein the additive for a non-aqueous electrolyte is present in an amount of 9.0 wt% or less based on a total weight of the non-aqueous electrolyte for a lithium secondary battery.

According to another aspect of the present disclosure, there is provided a lithium secondary battery including the non-aqueous electrolyte for a lithium secondary battery.

### ADVANTAGEOUS EFFECTS

Since a compound represented by Formula 1 of the present disclosure includes a fluorine-substituted alkyl group with excellent oxidation resistance and flame retardancy as well as a propargyl group in its structure, a robust film containing a fluorine element may be formed on a surface of an electrode. Thus, if the compound is included as an additive, a non-aqueous electrolyte capable of forming an electrode-electrolyte interface with low resistance and high flame retardancy and high-temperature durability may be provided. Also, a lithium secondary battery capable of achieving excellent storage characteristics and cycle characteristics at low and high temperatures may be achieved because battery output characteristics may be improved, heat generation and swelling phenomenon, which are caused by an additional reaction between the electrolytes when exposed to high temperatures, may be reduced, and performance improvement at low temperatures may be promoted by including the non-aqueous electrolyte. The non-aqueous electrolyte of the present disclosure may be particularly suitable for a high-output battery in which a high-capacity active material, such as a high-nickel-based positive electrode active materials, is used together.

### BRIEF DESCRIPTION OF THE DRAWINGS

The following drawings attached to the specification illustrate preferred examples of the present disclosure by example, and serve to enable technical concepts of the present disclosure to be further understood together with detailed description of the invention given below, and therefore the present disclosure should not be interpreted only with matters in such drawings.

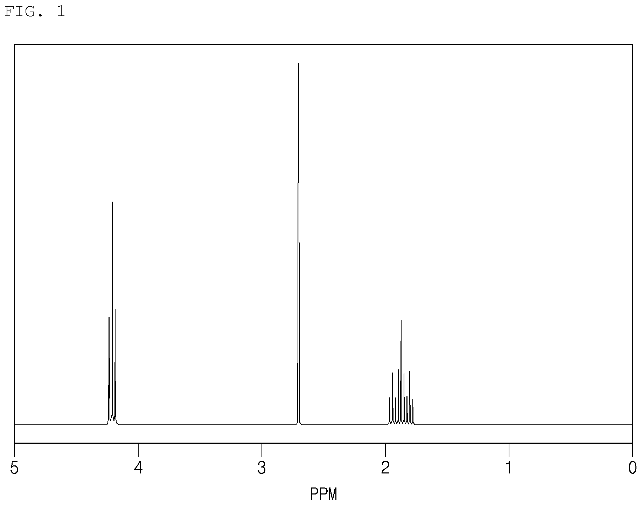

FIG. 1 is a ¹H-NMR graph of a compound represented by Formula 1-1.

### MODE FOR CARRYING OUT THE INVENTION

Hereinafter, the present disclosure will be described in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

Also, the terms used in the present specification are used to merely describe exemplary embodiments, but are not intended to limit the invention. The terms of a singular form may include plural forms unless referred to the contrary.

Before describing the present disclosure, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, -CH₂-, -CH₂CH₂-, -CH₂CH₂CH₂-, - CH₂(CH₃)CH-, -CH(CH₃)CH₂-, and -CH (CH₃) CH₂CH₂-.

The expression "alkylene group" denotes a branched or unbranched divalent unsaturated hydrocarbon group. In an embodiment, the alkylene group may be substituted or unsubstituted. The alkylene group may include a methylene group, an ethylene group, a propylene group, an isopropylene group, a butylene group, an isobutylene group, a tert-butylene group, a pentylene group, and 3-pentylene group.

Also, unless otherwise defined in the specification, the expression "substitution" denotes that at least one hydrogen bonded to carbon is substituted with an element other than hydrogen, for example, an alkyl group having 1 to 6 carbon atoms or fluorine.

### Additive for Non-aqueous Electrolyte

An additive for a non-aqueous electrolyte according to an embodiment of the present disclosure includes a compound represented by Formula 1 below.

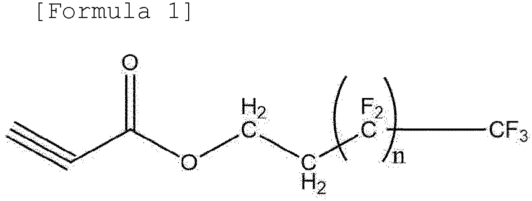

In Formula 1,
n is an integer of 2 to 20.

The compound represented by Formula 1 may form a robust solid electrolyte interphase (SEI) film containing a fluorine element on a surface of a negative electrode while a triple bond (-C≡C-) included in its molecular structure, that is, a propargyl group causes an electrochemical reaction during an electrochemical decomposition reaction. Also, a fluorine-substituted alkyl group having excellent flame retardancy and incombustibility, which is included in the molecular structure, may act as a radical scavenger caused by the fluorine element and may simultaneously form a passivation film capable of securing excellent oxidation resistance on a surface of a positive electrode. If the stable film is formed on the surface of the electrode as described above, since a side reaction between the electrode and an electrolyte solution is controlled, a lithium secondary battery with improved roomtemperature and low-temperature life characteristics may be provided.

Particularly, since the compound represented by Formula 1 of the present disclosure contains an ethylene group (-CH₂-CH₂-) in a linking group between an acrylate functional group and the terminal fluorine-substituted alkyl group, structural flexibility is improved by increasing a molecular chain. Thus, the compound of the present disclosure can form a film with more improved durability on the surface of the negative electrode in comparison to other compounds in which a fluorine-substituted alkyl group is directly bonded to an acrylate functional group or a methylene group (-CH₂-) is contained between an acrylate functional group and a terminal fluorine-substituted alkyl group.

Furthermore, since the compound represented by Formula 1 includes two oxygen elements in the molecular structure, oxidation safety is improved in comparison to a compound including three or more oxygen elements, and thus, high voltage stability may be improved and durability of the electrolyte may be improved.

As described above, in a case in which the compound represented by Formula 1 including two oxygen elements, the propargyl group, and the ethylene group (-CH₂-CH₂-) between the acrylate functional group and the terminal fluorine-substituted alkyl group, as a linking group, in the molecular structure is included as an electrolyte additive, an electrode-electrolyte interface film having low resistance, high flame retardancy and high-temperature durability, and flexible properties even at low temperatures may be formed. Therefore, since a non-aqueous electrolyte capable of improving output characteristics and reducing an exothermic reaction due to an additional side reaction when exposed to high-temperature conditions, such as thermal abuse, may be prepared, a lithium secondary battery capable of reducing a battery swelling phenomenon while having excellent storage characteristics and cycle characteristics at low and high temperatures may be achieved.

Specifically, in Formula 1, n may be an integer of 3 to 15, and, more specifically, n may be an integer of 4 to 10.

If the integer of n satisfies the above range, since thermal properties of the compound itself may be improved, stability of a film formed therefrom may be expected. Particularly, in Formula 1, in a case in which n is 16 or more, more particularly, in a case in which n is greater than 20, since viscosity and non-polarity of the material are increased as the fluorine element is excessively contained, solubility in the electrolyte is reduced, and thus, ionic conductivity may be reduced to cause poor battery performance.

Preferably, the compound represented by Formula 1 may include at least one of compounds represented by Formulae 1-1 to 1-3.

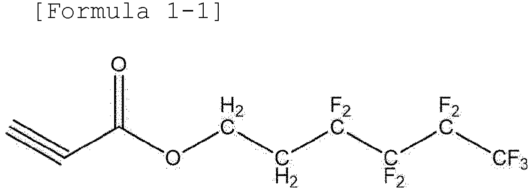

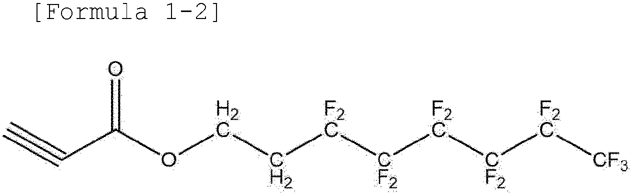

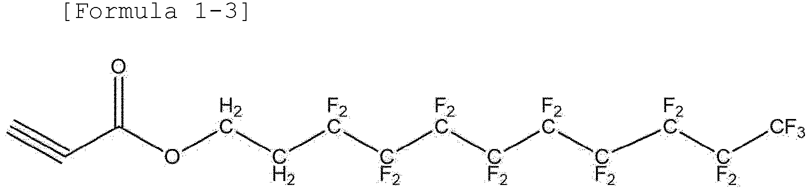

### Non-aqueous Electrolyte for Lithium Secondary Battery

Also, the non-aqueous electrolyte according to an embodiment of the present disclosure includes the additive for a non-aqueous electrolyte which includes the compound represented by Formula 1.

The non-aqueous electrolyte may further include a lithium salt, a non-aqueous organic solvent, and other electrolyte additives.

### (1) Additive for Non-aqueous Electrolyte

Since a description of the compound represented by Formula 1 overlaps with the above description, the description thereof will be omitted.

According to an embodiment of the present disclosure, the additive for a non-aqueous electrolyte may be present in an amount of 9.0 wt% or less, specifically, 0.1 wt% to 7.0 wt% based on a total weight of the non-aqueous electrolyte.

In a case in which the amount of the additive for a non-aqueous electrolyte satisfies the above range, since dissolution of transition metal from the positive electrode at high temperatures may be effectively suppressed by forming a stable film, excellent high-temperature durability may be achieved. That is, if the additive for a non-aqueous electrolyte is present in an amount of 0.1 wt% or more in the non-aqueous electrolyte, since a film-forming effect is improved to form a stable SEI film even during high-temperature storage, an increase in resistance and a decrease in capacity are prevented even after the high-temperature storage, and thus, overall performance may be improved. Also, if the additive for a non-aqueous electrolyte is present in an amount of 7.0 wt% or less, since the increase in resistance may be prevented by preventing formation of an excessively thick film during initial charge while controlling viscosity of the electrolyte so that a lithium salt may be easily dissolved, degradation of output characteristics and initial capacity of the secondary battery may be prevented.

Specifically, the additive for a non-aqueous electrolyte may be present in an amount of 0.1 wt% to 5 wt%, more specifically, 0.5 wt% to 3 wt% based on the total weight of the non-aqueous electrolyte.

### (2) Lithium Salt

Any lithium salt typically used in an electrolyte for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆-, SbF₆-, CH₃SO₃⁻, (CF₃CF₂SO₂)₂N-, (CF₃SO₂)₂N-, (FSO₂)₂N-, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂ (CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis (fluorosulfonyl) imide, LiFSI), LiN(SO₂CF₂CF₃)₂ (lithium bis(pentafluoroethanesulfonyl)imide, LiBETI), and LiN(SO₂CF₃)₂ (lithium bis(trifluoromethanesulfonyl)imide, LiTFSI) or a mixture of two or more thereof, and, as a representative example, the lithium salt may include at least one selected from the group consisting of LiBF₄, LiClO₄, LiPF₆, LiN(SO₂F)₂, LiN (SO₂CF₂CF₃)₂, and LiN (SO₂CF₃)₂.

The lithium salt may be appropriately changed in a normally usable range, but may be included in a concentration of 0.8 M to 3.0 M, specifically, 1.0 M to 3.0 M in the electrolyte to obtain an optimum effect of forming a film for preventing corrosion of the surface of the electrode.

If the concentration of the lithium salt is less than 0.8 M, since mobility of lithium ions is reduced, capacity characteristics may be degraded, and, if the concentration of the lithium salt is greater than 3.0 M, since viscosity of the non-aqueous electrolyte is excessively increased, electrolyte impregnability may be reduced and the film-forming effect may be reduced.

### (3) Non-aqueous Organic Solvent

Various non-aqueous organic solvents typically used in a non-aqueous electrolyte for a lithium secondary battery may be used as the non-aqueous organic solvent without limitation, wherein, specifically, a type thereof is not limited as long as decomposition due to an oxidation reaction during charge and discharge of the secondary battery may be minimized and desired properties may be exhibited together with an additive.

For example, a highly viscous cyclic carbonate-based organic solvent that well dissociates the lithium salt in the electrolyte due to high permittivity may be used as the non-aqueous organic solvent. Also, in order to prepare an electrolyte having higher ionic conductivity, the cyclic carbonate-based organic solvent may be mixed with at least one of a linear carbonate-based organic solvent and/or a linear ester-based organic solvent in an appropriate ratio and used as the non-aqueous organic solvent.

Specifically, in order to prepare an electrolyte having high ionic conductivity, (i) the cyclic carbonate-based organic solvent and (ii) at least one solvent of the linear carbonate-based organic solvent and the linear ester-based organic solvent may be mixed in a volume ratio of 10:90 to 80:20, specifically, 30:70 to 50:50 and used as the non-aqueous organic solvent of the present disclosure.

The cyclic carbonate-based organic solvent is a highly viscous organic solvent which may well dissociate the lithium salt in the electrolyte due to high permittivity, wherein specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include at least one of ethylene carbonate and propylene carbonate.

Also, the linear carbonate-based organic solvent is an organic solvent having low viscosity and low permittivity, wherein, as a representative example, at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate may be used, and the linear carbonate-based organic solvent may specifically include ethyl methyl carbonate (EMC).

Furthermore, specific examples of the linear ester-based organic solvent may be at least one organic solvent selected from the group consisting of methyl acetate, ethyl acetate, propyl acetate, methyl propionate, ethyl propionate (EP), propyl propionate (PP), and butyl propionate, and, among them, the linear ester-based organic solvent may include at least one of ethyl propionate and propyl propionate.

The organic solvent of the present disclosure may further include at least one cyclic ester-based organic solvent selected from the group consisting of γ-butyrolactone, γ-valerolactone, γ-caprolactone, σ-valerolactone, and ε-caprolactone, if necessary.

A remainder excluding other components except for the organic solvent, for example, the additive for a non-aqueous electrolyte of the present disclosure, the lithium salt, and other additives, in the non-aqueous electrolyte of the present disclosure may all be the non-aqueous organic solvent unless otherwise stated.

### (4) Other Additives

The non-aqueous electrolyte according to the embodiment of the present disclosure may further include other additives, which may form a stable film on the surfaces of the negative electrode and the positive electrode without significantly increasing initial resistance along with the effect of the additive by being used together with the additive, or may act as a complementary agent to suppress the decomposition of the solvent in the non-aqueous electrolyte and improve the mobility of the lithium ions.

These other additives are not particularly limited as long as they may form a stable film on the surfaces of the positive electrode and negative electrode.

Specifically, as a representative example, the other additives may include at least one additive selected from the group consisting of a cyclic carbonate-based compound, a halogen-substituted carbonate-based compound, a nitrile-based compound, a phosphate-based compound, a borate-based compound, and a lithium salt-based compound.

Specifically, the cyclic carbonate-based compound may improve durability of the battery by forming a stable SEI film mainly on the surface of the negative electrode during battery activation. The cyclic carbonate-based compound may include vinylene carbonate (VC) or vinyl ethylene carbonate, and may be present in an amount of 3 wt% or less based on the total weight of the non-aqueous electrolyte. In a case in which the amount of the cyclic carbonate-based compound in the non-aqueous electrolyte is greater than 3 wt%, cell swelling inhibition performance and initial resistance may be degraded.

The halogen-substituted carbonate-based compound may include fluoroethylene carbonate (FEC), and may be present in an amount of 5 wt% or less based on the total weight of the non-aqueous electrolyte. In a case in which the amount of the halogen-substituted carbonate-based compound is greater than 5 wt%, the cell swelling inhibition performance may be degraded.

Also, the nitrile-based compound may include at least one compound selected from the group consisting of succinonitrile, adiponitrile (Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The nitrile-based compound may act as a complementary agent to form an SEI film of the negative electrode, may act to suppress the decomposition of the solvent in the electrolyte, and may act to improve the mobility of the lithium ions. The nitrile-based compound may be present in an amount of 8 wt% or less based on the total weight of the non-aqueous electrolyte. In a case in which the amount of the nitrile-based compound in the non-aqueous electrolyte is greater than 8 wt%, since the film formed on the surface of the electrode is increased to increase the resistance, battery performance may be degraded.

Furthermore, since the phosphate-based compound stabilizes PF₆ anions in the electrolyte and helps to form the positive electrode and negative electrode films, the durability of the battery may be improved. The phosphate-based compound may include at least one compound selected from the group consisting of lithium difluoro(bisoxalato)phosphate (LiDFOP), LiPO₂F₂, tris(trimethylsilyl) phosphate, tris(trimethylsilyl) phosphite, tris(2,2,2-trifluoroethyl) phosphate, and tris(trifluoroethyl)phosphite, and may be present in an amount of 3 wt% or less based on the total weight of the non-aqueous electrolyte.

The borate-based compound may improve the mobility of the lithium ions by promoting ion-pair separation of the lithium salt, may reduce interfacial resistance of the SEI film, and may solve problems, such as hydrofluoric acid gas generation, by dissociating a material, such as LiF, which is formed during a battery reaction and is not well separated. The borate-based compound may include lithium bis (oxalato)borate (LiBOB, LiB (C₂O₄)₂), lithium oxalyldifluoroborate, or tetramethyl trimethylsilylborate (TMSB), and may be present in an amount of 3 wt% or less based on the total weight of the non-aqueous electrolyte.

Also, the lithium salt-based compound is a compound different from the lithium salt included in the non-aqueous electrolyte, wherein the lithium salt-based compound may include at least one compound selected from the group consisting of LiODFB and LiBF₄, and may be present in an amount of 3 wt% or less based on the total weight of the non-aqueous electrolyte.

Two or more other additives may be mixed and used, and the other additives may be present in an amount of 10 wt% or less, particularly 0.01 wt% to 10 wt%, and preferably 0.1 wt% to 5.0 wt% based on the total weight of the non-aqueous electrolyte.

If the amount of the other additives is less than 0.01 wt%, high-temperature storage characteristics and gas reduction effect to be achieved from the additives are insignificant, and, if the amount of the other additives is greater than 10 wt%, there is a possibility that the side reaction in the electrolyte occurs excessively during charge and discharge of the battery. Particularly, since the other additives may not be sufficiently decomposed when an excessive amount of the other additives is added, the other additives may be present in the form of an unreacted material or precipitates in the electrolyte at room temperature. Accordingly, since the resistance is increased, life characteristics of the secondary battery may be degraded.

### Lithium Secondary Battery

Next, a lithium secondary battery according to the present disclosure will be described.

The lithium secondary battery according to the present disclosure includes a positive electrode, a negative electrode, a separator disposed between the positive electrode and the negative electrode, and a non-aqueous electrolyte, and, in this case, the non-aqueous electrolyte is the non-aqueous electrolyte according to the present disclosure. Since the non-aqueous electrolyte has been described above, a description thereof will be omitted and other components will be described below.

### (1) Positive Electrode

The positive electrode according to the present disclosure may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum (e.g., Li(NiₓCo_{y}Mn_{z})O₂, 0<x<1, 0<y<1, 0<z<1, and x+y+z=1), and, more specifically, may include a lithium-nickel-manganese-cobalt-based oxide represented by Formula 2 below in terms of the improvement of capacity characteristics and stability of the battery.

[Formula 2] Li(NiₐCo_{b}Mn_{c}M_{d})O₂

In Formula 2,
M is tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), or molybdenum (Mo), and
a, b, c, and d are atomic fractions of each independent elements,
wherein 0.55≤a<1, 0<b≤0.3, 0<c≤0.3, 0≤d≤0.1, and a+b+c+d=1.
a, b, c, and d may satisfy 0.60≤a≤0.95, 0.01≤b≤0.20, 0.01≤c≤0.20, and 0≤d≤0.05, respectively.

Specifically, the lithium-nickel-manganese-cobalt-based oxide may be a lithium composite transition metal oxide having a nickel content among transition metals of 55 atm% or more, preferably, 60 atm% or more, and a representative example thereof may be at least one selected from the group consisting of Li(Ni_{0.5}Mn_{0.3}Co_{0.2})O₂, Li(Ni_{0.5}Mn_{0.2}Co_{0.3})O₂, Li(Ni_{0.6}Mn_{0.2}Co_{0.2})O₂, Li(Ni_{0.7}Mn_{0.15}Co_{0.15})O₂, Li(Ni_{0.8}Mn_{0.1}Co_{0.1})O₂, and Li(Ni_{0.9}Co_{0.06}Mn_{0.03}Al_{0.01})O₂.

Also, in addition to the lithium-nickel-manganese-cobalt-based oxide, the positive electrode active material may include at least one of lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), or lithium-nickel-cobalt-transition metal (M) oxide (e.g., Li(Niₚ₂Co_{q2}Mnᵣ₃Mₛ₂)O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<S2<1, and p2+q2+r3+S2=1)) .

The positive electrode active material may be included in an amount of 90 wt% to 99 wt%, specifically, 93 wt% to 98 wt% based on a total weight of a solid content in the positive electrode active material layer.

The conductive agent is not particularly limited as long as it has conductivity without causing adverse chemical changes in the battery, and, for example, a conductive material, such as: carbon black powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent is commonly added in an amount of 1 wt% to 30 wt% based on the total weight of the solid content in the positive electrode active material layer.

The binder is a component that acts to improve the adhesion between positive electrode active material particles and the adhesion between the positive electrode active material and a current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The positive electrode of the present disclosure may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled to form a positive electrode active material layer, or a method in which the positive electrode active material layer is cast on a separate support and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content in the active material slurry including the positive electrode active material as well as optionally the binder and the conductive agent is in a range of 10 wt% to 70 wt%, preferably, 20 wt% to 60 wt%.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide, and, specifically, lithium metal, a carbon material capable of reversibly intercalating/deintercalating lithium ions, or a mixture of the carbon material and a silicon-based material, which may be doped and undoped with lithium, may be used.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, nickel (Ni), sodium (Na), potassium (K), rubidium (Rb), cesium (Cs), francium (Fr), beryllium (Be), Mg, Ca, Sr, silicon (Si), antimony (Sb), lead (Pb), In, Zn, barium (Ba), radium (Ra), germanium (Ge), Al, and tin (Sn) or an alloy of lithium and the metal may be used.

One selected from the group consisting of PbO, PbO₂, Pb₂O₃, Pb₃O₄, Sb₂O₃, Sb₃O₄, Sb₂O₃, GeO, GeO₂, Bi₂O₃, Bi₂O₄, Bi₂O₃, LiₓFe₂O₃ (O≤x≤1), LiₓWO₂ (O≤x≤1), and SnₓMe₁₋ₓMe'_{y}O_{z} (Me: manganese (Mn), Fe, Pb, or Ge; Me': Al, B, phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x<2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), S, selenium (Se), tellurium (Te), polonium (Po), and a combination thereof.

The transition metal oxide may include lithium-containing titanium composite oxide (LTO), vanadium oxide, and lithium vanadium oxide.

The negative electrode active material may be included in an amount of 80 wt% to 99 wt% based on a total weight of a solid content in the negative electrode active material layer.

The conductive agent is a component for further improving conductivity of the negative electrode active material, wherein the conductive agent may be added in an amount of 1 wt% to 20 wt% based on the total weight of the solid content in the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 1 wt% to 30 wt% based on the total weight of the solid content in the negative electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The negative electrode may be prepared according to a method of preparing a negative electrode which is known in the art. For example, the negative electrode may be prepared by a method in which a negative electrode collector is coated with a negative electrode active material slurry, which is prepared by dissolving or dispersing the negative electrode active material as well as optionally the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector generally has a thickness of 3 um to 500 um. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The solvent may include water or an organic solvent, such as NMP and alcohol, and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 75 wt%, preferably, 50 wt% to 65 wt%.

### (3) Separator

The lithium secondary battery according to the present disclosure includes a separator between the positive electrode and the negative electrode.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The lithium secondary battery according to the present disclosure as described above may be suitably used in portable devices, such as mobile phones, notebook computers, and digital cameras, and electric cars such as hybrid electric vehicles (HEVs) .

Thus, according to another embodiment of the present disclosure, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present disclosure is not particularly limited, but a cylindrical type using a can, a prismatic type, a pouch type, or a coin type may be used.

The lithium secondary battery according to the present disclosure may not only be used in a battery cell that is used as a power source of a small device, but may also be used as a unit cell in a medium and large sized battery module including a plurality of battery cells.

Hereinafter, the present disclosure will be described in detail according to examples.

In this case, the invention may be embodied in many different forms and should not be construed as being limited to the embodiments set forth herein. Rather, these example embodiments are provided so that this description will be thorough and complete, and will fully convey the scope of the present disclosure to those skilled in the art.

### Examples

### I. Synthesis of Non-aqueous Electrolyte Additives

### Synthesis Example 1. Synthesis of the Compound Represented by Formula 1-1

500 mL of ethyl acetate was added to a reactor maintained at 10°C, and, after 52.82 g (0.2 mole) of 2-(perfluorobutyl) ethyl alcohol (manufactured by Sigma-Aldrich) and 24.3 g (0.24 mole) of trimethyl amine (manufactured by Samchun Chemical Co., Ltd.) were dissolved, 22.20 g of propynoyl chloride (0.24 mole, manufactured by TCL) was slowly added dropwise while stirring.

Then, the reactants were further stirred for 2 hours at room temperature, and, after a reaction was completed, 500 mL of water was added to separate the water and an organic layer, and the organic layer was obtained.

After washing (rinsing) the obtained organic layer twice with distilled water, a solvent was vacuum distilled to obtain the compound of Formula 1-1 (yield: 75%). A ¹H-NMR graph (500 MHz NMR, Aglient DD1) of the compound of Formula 1-1 is illustrated in FIG. 1.

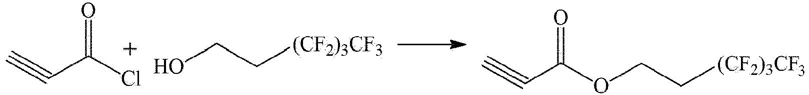

### Synthesis Example 2. Synthesis of the Compound Represented by Formula 1-2

The compound represented by Formula 1-2 was obtained in the same manner as in Example 1 except that 2-(perfluorohexyl) ethyl alcohol (manufactured by Sigma-Aldrich) was used instead of 2-(perfluorobutyl) ethyl alcohol (manufactured by Sigma-Aldrich) (yield: 74%).

### Synthesis Example 3. Synthesis of the Compound Represented by Formula 1-3

The compound represented by Formula 1-3 was obtained in the same manner as in Example 1 except that 2-(perfluorononyl) ethyl alcohol (manufactured by Sigma-Aldrich) was used instead of 2-(perfluorobutyl) ethyl alcohol (manufactured by Sigma-Aldrich) (yield: 73%).

### II. Secondary Battery Preparation

### Example 1.

### (Non-aqueous Electrolyte Preparation)

After LiPF₆ was dissolved in a non-aqueous organic solvent, in which ethylene carbonate (EC), propylene carbonate (PC), ethyl propionate (EP), and propyl propionate (PP) were mixed in a volume ratio of 30:20:30:20, such that a concentration of the LiPF₆ was 1.0 M, a non-aqueous electrolyte was prepared by adding 0.5 wt% of the compound represented by Formula 1-1, which was obtained in Synthesis Example 1, as an additive (see Table 1 below).

### (Positive Electrode Preparation)

A positive electrode active material (LiCoO₂), a conductive agent (carbon black), and a binder (polyvinylidene fluoride) were added in a weight ratio of 97.5:1:1.5 to N-methyl-2-pyrrolidone (NMP), as a solvent, to prepare a positive electrode active material slurry (solid content concentration 60 wt%). A 15 um thick positive electrode collector (Al thin film) was coated with the positive electrode active material slurry, dried, and then roll-pressed to prepare a positive electrode.

### (Negative Electrode Preparation)

A negative electrode active material (graphite), a conductive agent (carbon black), and a binder (polyvinylidene fluoride) were added to distilled water in a weight ratio of 96:0.5:3.5 to prepare a negative electrode active material slurry (solid content concentration 50 wt%). An 8 um thick negative electrode collector (Cu thin film) was coated with the negative electrode active material slurry, dried, and then roll-pressed to prepare a negative electrode.

### (Secondary Battery Preparation)

After an electrode assembly was prepared by stacking a polyethylene porous film, as a separator, with the positive electrode and negative electrode prepared by the above-described methods, the electrode assembly was put in a battery case, 5 mL of the above-prepared non-aqueous electrolyte was injected thereinto, and the battery case was sealed to prepare a pouch-type lithium secondary battery (battery capacity 6.24 mAh) .

### Example 2.

A pouch-type lithium secondary battery was prepared in the same manner as in Example 1 except that a non-aqueous electrolyte was prepared by adding the compound represented by Formula 1-2 which was obtained in Synthesis Example 2, instead of the compound represented by Formula 1-1, as an additive (see Table 1 below).

### Example 3.

A pouch-type lithium secondary battery was prepared in the same manner as in Example 1 except that a non-aqueous electrolyte was prepared by adding the compound represented by Formula 1-3 which was obtained in Synthesis Example 3, instead of the compound represented by Formula 1-1, as an additive (see Table 1 below).

### Example 4.

A pouch-type lithium secondary battery was prepared in the same manner as in Example 1 except that a non-aqueous electrolyte was prepared by dissolving LiPF₆ in a non-aqueous organic solvent to have a concentration of 1.0 M and then adding 1.0 wt% of the compound represented by Formula 1-1 as an additive (see Table 1 below).

### Example 5.

A pouch-type lithium secondary battery was prepared in the same manner as in Example 1 except that a non-aqueous electrolyte was prepared by dissolving LiPF₆ in a non-aqueous organic solvent to have a concentration of 1.0 M and then adding 5.0 wt% of the compound represented by Formula 1-1 as an additive (see Table 1 below).

### Comparative Example 1.

A lithium secondary battery was prepared in the same manner as in Example 1 except that a non-aqueous electrolyte was prepared by dissolving LiPF₆ in a non-aqueous organic solvent to have a concentration of 1.0 M and without including an additive (see Table 1 below).

### Comparative Example 2.

A lithium secondary battery was prepared in the same manner as in Example 1 except that a non-aqueous electrolyte was prepared by adding a compound represented by Formula 3 below (a=25) instead of the compound represented by Formula 1-1 (see Table 1 below).

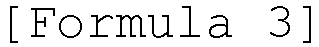

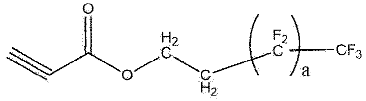

### Comparative Example 3.

A lithium secondary battery was prepared in the same manner as in Example 1 except that a non-aqueous electrolyte was prepared by dissolving LiPF₆ in a non-aqueous organic solvent to have a concentration of 1.0 M and then adding 0.05 wt% of the compound represented by Formula 1-1 as an additive (see Table 1 below).

### Comparative Example 4.

A lithium secondary battery was prepared in the same manner as in Example 1 except that a non-aqueous electrolyte was prepared by dissolving LiPF₆ in a non-aqueous organic solvent to have a concentration of 1.0 M and then adding 8.0 wt% of the compound represented by Formula 1-1 as an additive (see Table 1 below).

### Comparative Example 5.

A lithium secondary battery was prepared in the same manner as in Example 1 except that a non-aqueous electrolyte was prepared by adding a compound represented by Formula 4 below instead of the compound represented by Formula 1-1 (see Table 1 below).

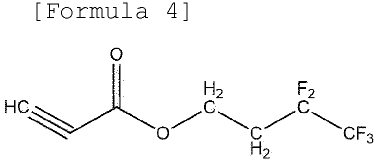

### Comparative Example 6.

A lithium secondary battery was prepared in the same manner as in Example 1 except that a non-aqueous electrolyte was prepared by adding a compound represented by Formula 5 below instead of the compound represented by Formula 1-1 (see Table 1 below).

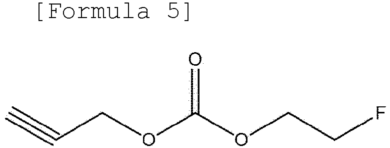

### Comparative Example 7.

A lithium secondary battery was prepared in the same manner as in Example 1 except that a non-aqueous electrolyte was prepared by dissolving LiPF₆ in a non-aqueous organic solvent to have a concentration of 1.0 M and then adding 10.0 wt% of the compound represented by Formula 1-1 as an additive (see Table 1 below).

In this case, since the lithium salt was not dissolved by a rather large amount of the additive, the preparation of the non-aqueous electrolyte was not possible.

**[Table 1]**

| | Non-aqueous organic solvent | Additive | |
|---|---|---|---|
| | | Type | Addition amount (wt%) |
| Example 1 | EC:PC:EP:PP = 30:20:30:20 volume ratio | Formula 1-1 | 0.5 |
| Example 2 | | Formula 1-2 | 0.5 |
| Example 3 | | Formula 1-3 | 0.5 |
| Example 4 | | Formula 1-1 | 1.0 |
| Example 5 | | Formula 1-1 | 5.0 |
| Comparative Example 1 | | - | - |
| Comparative Example 2 | | Formula 3 | 0.5 |
| Comparative Example 3 | | Formula 1-1 | 0.05 |
| Comparative Example 4 | | Formula 1-1 | 8.0 |
| Comparative Example 5 | | Formula 4 | 0.5 |
| Comparative Example 6 | | Formula 5 | 0.5 |
| Comparative Example 7 | | Formula 1-1 | 10.0 |

### [Experimental Examples]

### Experimental Example 1. Initial Capacity Evaluation

The lithium secondary batteries prepared in Examples 1 to 5 and the lithium secondary batteries prepared in Comparative Examples 1 to 6 were activated at a CC of 0.1 C. Subsequently, each lithium secondary battery was charged at a CC of 0.33 C to 4.45 V under a constant current-constant voltage (CC-CV) charging condition using PESC05-0.5 charge/discharge equipment (manufacturer: PNE SOLUTION Co., Ltd., 5 V, 500 mA) at 25°C, then subjected to 0.05 C current cut-off, and discharged at 0.33 C under a CC condition to 2.5 V. After the above charging and discharging were defined as one cycle and three cycles were performed, capacity of a third cycle was summarized as initial capacity and presented in Table 2 below.

### Experimental Example 2. Initial Resistance Evaluation

The lithium secondary batteries prepared in Examples 1 to 5 and the lithium secondary batteries prepared in Comparative Examples 1 to 6 were activated at a CC of 0.1 C. Subsequently, each lithium secondary battery was charged at a CC of 0.33 C to 4.45 V under a constant current-constant voltage (CC-CV) charging condition using PESC05-0.5 charge/discharge equipment (manufacturer: PNE SOLUTION Co., Ltd., 5 V, 500 mA) at 25°C, then subjected to 0.05 C current cut-off, and discharged at 0.33 C under a CC condition to 2.5 V. After the above charging and discharging were defined as one cycle and three cycles were performed, each lithium secondary battery was discharged for 10 seconds at a current of 2.5 C to a state of charge (SOC) of 50%, initial resistance (DC-IR) was then calculated using a voltage difference measured, and the results thereof are presented in Table 2 below.

**[Table 2]**

| | Initial resistance (SOC 50%) (mOhm) | Initial capacity (0.3 C / mAh) |
|---|---|---|
| Example 1 | 40.5 | 2023.0 |
| Example 2 | 40.3 | 2023.2 |
| Example 3 | 39.8 | 2025.1 |
| Example 4 | 41.1 | 2021.5 |
| Example 5 | 41.5 | 2019.0 |
| Comparative Example 1 | 42.0 | 2017.2 |
| Comparative Example 2 | 45.1 | 2008.8 |
| Comparative Example 3 | 41.9 | 2017.3 |
| Comparative Example 4 | 43.1 | 2011.4 |
| Comparative Example 5 | 42.0 | 2016.0 |
| Comparative Example 6 | 42.3 | 2014.3 |

As illustrated in Table 2, with respect to the secondary batteries prepared in Examples 1 to 5, it may be understood that both initial resistance and initial capacity were improved in comparison to those of the secondary batteries prepared in Comparative Examples 1 to 6.

### Experimental Example 3. Low-temperature (-10°C) Resistance Evaluation

The lithium secondary batteries prepared in Examples 1 to 5 and the lithium secondary batteries prepared in Comparative Examples 1 to 6 were activated at a CC of 0.1 C. Subsequently, after each lithium secondary battery was set to an SOC of 35% and then stored in a chamber at -10°C for 24 hours, low-temperature storage resistance (DC-IR) was calculated using a cell voltage difference which was measured by discharging the lithium secondary battery at a current of 2.5 C for 10 seconds, and the results thereof are presented in Table 3 below.

### Experimental Example 4. Low-temperature (-10°C) Capacity Evaluation

The lithium secondary batteries prepared in Examples 1 to 5 and the lithium secondary batteries prepared in Comparative Examples 1 to 6 were activated at a CC of 0.1 C. Subsequently, after each lithium secondary battery was set to an SOC of 10% and then stored in a chamber at -10°C for 24 hours, capacity, which was measured when the lithium secondary battery was discharged at a current of 0.05 C to an SOC of 0 (V cut off = 2.5 C), is presented in Table 3 below.

**[Table 3]**

| | Low-temperature (-10°C) resistance (SOC 35%) (mOhm) | Low-temperature (-10°C) capacity (SOC 35%) (mAh) |
|---|---|---|
| Example 1 | 172.2 | 80.4 |
| Example 2 | 169.9 | 81.5 |
| Example 3 | 171.0 | 80.0 |
| Example 4 | 170.4 | 79.3 |
| Example 5 | 172.2 | 78.7 |
| Comparative Example 1 | 185.2 | 76.6 |
| Comparative Example 2 | 197.4 | 71.2 |
| Comparative Example 3 | 185.5 | 76.6 |
| Comparative Example 4 | 193.0 | 65.4 |
| Comparative Example 5 | 187.0 | 75.0 |
| Comparative Example 6 | 172.0 | 80.2 |

As illustrated in Table 3, with respect to the secondary batteries prepared in Examples 1 to 5, it may be understood that both low-temperature resistance and low-temperature capacity were improved in comparison to those of the secondary batteries prepared in Comparative Examples 1 to 6.

## Claims

1. An additive for a non-aqueous electrolyte, the additive comprising a compound represented by Formula 1: 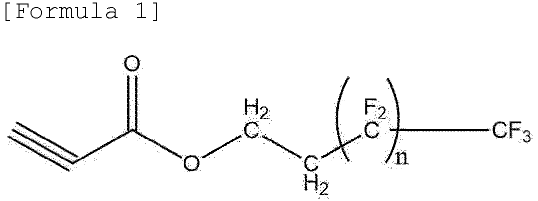
wherein, in Formula 1,
n is an integer of 2 to 20.

2. The additive for a non-aqueous electrolyte of claim 1, wherein, in Formula 1, n is an integer of 3 to 15.

3. The additive for a non-aqueous electrolyte of claim 1, wherein, in Formula 1, n is an integer of 4 to 10.

4. The additive for a non-aqueous electrolyte of claim 1, wherein the compound represented by Formula 1 is at least one of compounds represented by Formulae 1-1 to 1-3:

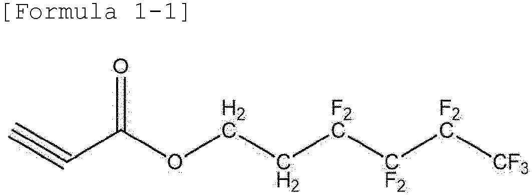

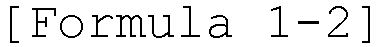

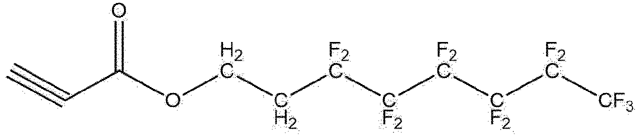

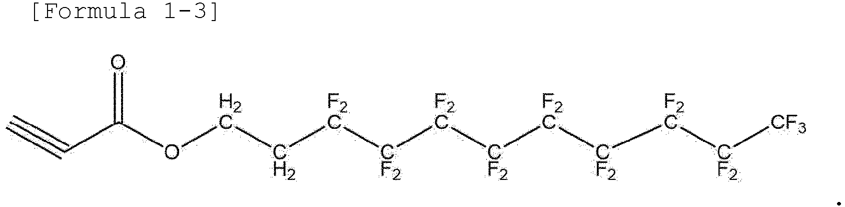

5. A non-aqueous electrolyte for a lithium secondary battery, the non-aqueous electrolyte comprising a lithium salt, an organic solvent, and the additive for a non-aqueous electrolyte of claim 1,
wherein the additive for a non-aqueous electrolyte is present in an amount of 9.0 wt% or less based on a total weight of the non-aqueous electrolyte for a lithium secondary battery.

6. The non-aqueous electrolyte for a lithium secondary battery of claim 5, wherein the additive for a non-aqueous electrolyte is present in an amount of 0.1 wt% to 7.0 wt% based on the total weight of the non-aqueous electrolyte for a lithium secondary battery.

7. The non-aqueous electrolyte for a lithium secondary battery of claim 5, wherein the additive for a non-aqueous electrolyte is present in an amount of 0.1 wt% to 5.0 wt% based on the total weight of the non-aqueous electrolyte for a lithium secondary battery.

8. The non-aqueous electrolyte for a lithium secondary battery of claim 5, further comprising at least one other additive selected from the group consisting of a cyclic carbonate-based compound, a halogen-substituted carbonate-based compound, a nitrile-based compound, a phosphate-based compound, a borate-based compound, and a lithium salt-based compound.

9. A lithium secondary battery comprising a positive electrode; a negative electrode; a separator disposed between the negative electrode and the positive electrode; and
the non-aqueous electrolyte for a lithium secondary battery of claim 5.

## Patentansprüche

1. Additiv für einen wasserfreien Elektrolyten, wobei das Additiv eine durch die Formel 1 dargestellte Verbindung umfasst: 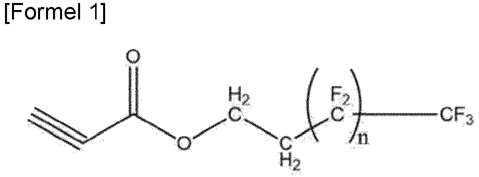
wobei, in Formel 1,
n eine ganze Zahl von 2 bis 20 ist.

2. Additiv für einen wasserfreien Elektrolyten nach Anspruch 1, wobei, in Formel 1, n eine ganze Zahl von 3 bis 15 ist.

3. Additiv für einen wasserfreien Elektrolyten nach Anspruch 1, wobei, in Formel 1, n eine ganze Zahl von 4 bis 10 ist.

4. Additiv für einen wasserfreien Elektrolyten nach Anspruch 1, wobei die durch Formel 1 dargestellte Verbindung mindestens eine der durch die Formeln 1-1 bis 1-3 dargestellten Verbindungen ist:

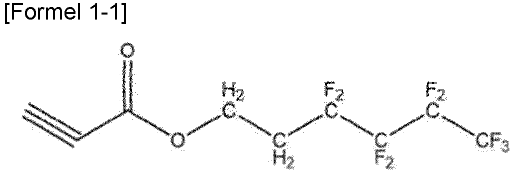

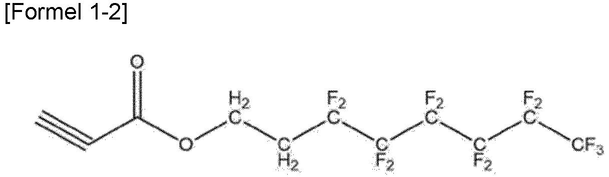

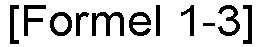

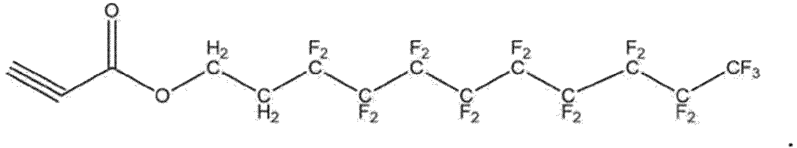

5. Wasserfreier Elektrolyt für eine Lithiumsekundärbatterie, wobei der wasserfreie Elektrolyt ein Lithiumsalz, ein organisches Lösungsmittel und das Additiv für einen wasserfreien Elektrolyten nach Anspruch 1 umfasst,
wobei das Additiv für einen wasserfreien Elektrolyten in einer Menge von 9,0 Gew.-% oder weniger, bezogen auf das Gesamtgewicht des wasserfreien Elektrolyten für eine Lithiumsekundärbatterie, vorhanden ist.

6. Wasserfreier Elektrolyt für eine Lithiumsekundärbatterie nach Anspruch 5, wobei das Additiv für einen wasserfreien Elektrolyten in einer Menge von 0,1 Gew.-% bis 7,0 Gew.-%, bezogen auf das Gesamtgewicht des wasserfreien Elektrolyten für eine Lithiumsekundärbatterie, vorhanden ist.

7. Wasserfreier Elektrolyt für eine Lithiumsekundärbatterie nach Anspruch 5, wobei das Additiv für einen wasserfreien Elektrolyten in einer Menge von 0,1 Gew.-% bis 5,0 Gew.-%, bezogen auf das Gesamtgewicht des wasserfreien Elektrolyten für eine Lithiumsekundärbatterie, vorhanden ist.

8. Wasserfreier Elektrolyt für eine Lithiumsekundärbatterie nach Anspruch 5, weiter umfassend mindestens ein weiteres Additiv, das aus der Gruppe ausgewählt ist, die aus einer zyklischen Verbindung auf Carbonatbasis, einer halogensubstituierten Verbindung auf Carbonatbasis, einer Verbindung auf Nitrilbasis, einer Verbindung auf Phosphatbasis, einer Verbindung auf Boratbasis und einer Verbindung auf Lithiumsalzbasis besteht.

9. Lithiumsekundärbatterie, umfassend eine positive Elektrode; eine negative Elektrode; einen zwischen der negativen Elektrode und der positiven Elektrode angeordneten Separator; und
den wasserfreien Elektrolyten für eine Lithiumsekundärbatterie nach Anspruch 5.

## Revendications

1. Additif pour électrolyte non aqueux, l'additif comprenant un composé représenté par la Formule 1 : 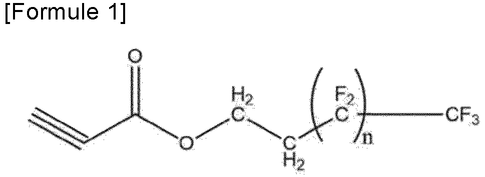
dans lequel, dans la Formule 1,
n est un nombre entier de 2 à 20.

2. Additif pour un électrolyte non aqueux selon la revendication 1, dans lequel, dans la Formule 1, n est un nombre entier de 3 à 15.

3. Additif pour un électrolyte non aqueux selon la revendication 1, dans lequel, dans la Formule 1, n est un nombre entier de 4 à 10.

4. Additif pour un électrolyte non aqueux selon la revendication 1, dans lequel le composé représenté par la Formule 1 est au moins un composé sélectionné parmi les composés représentés par les Formules 1-1 à 1-3 :

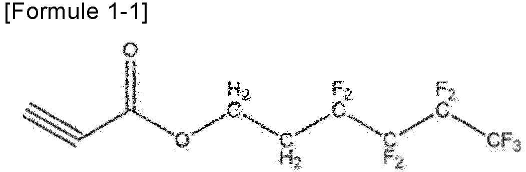

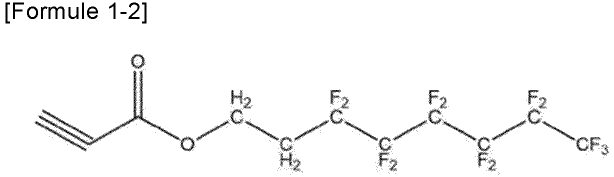

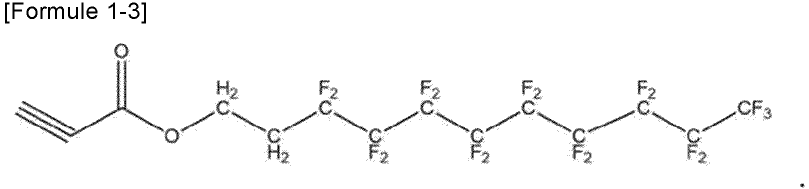

5. Électrolyte non aqueux pour une batterie secondaire au lithium, l'électrolyte non aqueux comprenant un sel de lithium, un solvant organique et l'additif pour un électrolyte non aqueux selon la revendication 1,
dans lequel l'additif pour un électrolyte non aqueux est présent en une quantité de 9,0 % en poids ou moins par rapport à un poids total de l'électrolyte non aqueux pour une batterie secondaire au lithium.

6. Électrolyte non aqueux pour une batterie secondaire au lithium selon la revendication 5, dans lequel l'additif pour un électrolyte non aqueux est présent en une quantité de 0,1 % en poids à 7,0 % en poids par rapport à un poids total de l'électrolyte non aqueux pour une batterie secondaire au lithium.

7. Électrolyte non aqueux pour une batterie secondaire au lithium selon la revendication 5, dans lequel l'additif pour un électrolyte non aqueux est présent en une quantité de 0,1 % en poids à 5,0 % en poids par rapport à un poids total de l'électrolyte non aqueux pour une batterie secondaire au lithium.

8. Électrolyte non aqueux pour une batterie secondaire au lithium selon la revendication 5, comprenant en outre au moins un autre additif sélectionné parmi le groupe constitué d'un composé à base de carbonate cyclique, un composé à base de carbonate substitué par halogène, un composé à base de nitrile, un composé à base de phosphate, un composé à base de borate et un composé à base de sel de lithium.

9. Batterie secondaire au lithium comprenant une électrode positive ; une électrode négative ; un séparateur disposé entre l'électrode positive et l'électrode négative ; et
l'électrolyte non aqueux pour une batterie secondaire au lithium selon la revendication 5.
